(19) Europäisches Patentamt
European Patent Office
Office européen des brevets

(11) **EP 2 650 652 A1**

(12) **EUROPEAN PATENT APPLICATION**
published in accordance with Art. 153(4) EPC

(43) Date of publication:
**16.10.2013 Bulletin 2013/42**

(51) Int Cl.:
*G01D 5/14* (2006.01)    *B62D 5/04* (2006.01)
*G01B 7/30* (2006.01)    *G01D 5/20* (2006.01)
*G01L 3/10* (2006.01)

(21) Application number: **11847008.7**

(22) Date of filing: **09.12.2011**

(86) International application number:
**PCT/JP2011/078609**

(87) International publication number:
**WO 2012/077803 (14.06.2012 Gazette 2012/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2010 JP 2010276014**

(71) Applicant: **JTEKT Corporation**
**Osaka-shi, Osaka 542-8502 (JP)**

(72) Inventor: **URA, Noritake**
**Osaka-shi**
**Osaka 542-8502 (JP)**

(74) Representative: **Winter, Brandl, Fürniss, Hübner, Röss, Kaiser, Polte - Partnerschaft**
**Bavariaring 10**
**80336 München (DE)**

(54) **ROTATION ANGLE DETECTION APPARATUS, TORQUE DETECTION APPARATUS, AND ELECTRIC POWER STEERING APPARATUS**

(57)    Each rotation angle sensor configuring a torque sensor outputs sensor signals of three phases which have a composite waveform of a triple angle component and a 7-fold angle component, and having phases of signal changes corresponding to the rotation angle equally shifted. On the other hand, the respective rotation angle detection units subtract an average value of the respective sensor values a, b, and c from the respective sensor values a, b, and c, and extract values of the 7-fold angle components included in the respective sensor values a, b, and c to detect an electric angle θel having the multiplication factor of angle of 7. Seven mechanical angle estimated values θab_e (θab_e1 to θab_e7) estimated on the basis of the electric angle θel are converted into triple angle components, and compared with the average values of the respective sensor values a, b, and c, to thereby detect a mechanical angle (θab) of a steering shaft to be detected.

*Fig. 5*

```
                START

    INPUT RESPECTIVE SENSOR SIGNALS          —101

    CALCULATE MEAN VALUE                      —102
         ((a+b+c)/3)

    EXTRACT 7-FOLD ANGLE COMPONENT            —103
    (NON-PHASE-MULTIPLE ANGLE COMPONENT)

    DETECT AND OUTPUT ELECTRIC ANGLES         —104
         (θel(θel1, θel2))

    CALCULATE MECHANICAL ANGLE ESTIMATED VALUES  —105
         (θab_e(θab_e1~ab_e7))

    SUBSTITUTE ESTIMATED VALUES INTO BASIS    —106
    EXPRESSION OF TRIPLE ANGLE COMPONENT, AND
    COMPARE VALUES WITH MEAN VALUE

    DETECT AND OUTPUT MECHANICAL ANGLE        —107
         (θab(θab1, θab2))

                 END
```

EP 2 650 652 A1

**Description**

Technical Field

The present invention relates to a rotation angle detection device, a torque detection device, and an electric power steering device.

Background Art

As usual, for applications in which an angle detection with a high precision is required such as a motor resolver or a torque sensor, a high multiplication factor of angle (electric angle magnification) is set in a rotation angle sensor. For example, if the multiplication factor of angle is six (6X), one cycle (electric angle 360°) of a rotation angle (electric angle) detected by the rotation angle sensor is "1/6 (mechanical angle 60°)" when being converted into a mechanical angle with one mechanical rotation to be detected as one cycle. As a result, a configuration in which a high angular resolution is ensured is generalized.

However, when the multiplication factor of angle is increased, a plurality of mechanical angles correspond to one electric angle to be detected. For example, when the electric angle detected on the basis of the rotation angle sensor of the above- mentioned "6X" is "60°", the estimated mechanical angles are six angles of "10°", "70°", "130°", "190°", "250°", and "310°". For that reason, up to now, when the mechanical angle is to be detected with the use of the rotation angle sensor having the high multiplication factor of angle, an increase or a decrease in the electric angle to be detected is accumulated with the use of a counter, or the respective electric angles detected by two rotation angle sensors are compared with each other by using those sensors.

For example, an electric power steering device disclosed in Patent Literature 1 is equipped with a so-called twin resolver torque sensor in which a pair of resolvers are arranged on both ends of a torsion bar disposed on a steering shaft. A steering torque is detected on the basis of a difference in a rotation angle change between a steering side and a rack side, which are detected by those two resolvers, that is, a torsion angle of the torsion bar. Also, two electric angles different in the multiplication factor of angle are compared with each other. As a result, the rotation angle of the steering shaft, that is, the steering angle which is the mechanical angle can be detected.

Citation List

Patent Literature

Patent Literature 1: JP- A- 2005- 147733
Patent Literature 2: JP- A- 2010- 48760
Patent Literature 3: JP- A- 2007- 51683

Summary of Invention

Technical Problem

However, in the above- mentioned configuration using two resolvers, it is difficult to apply except for the twin resolver torque sensor that can use the existing configuration since a size of an apparatus becomes large. Taking an increase in the manufacturing costs associated with an increase in the number of resolvers into consideration, in fact, it is impossible to multiplex a general- purpose product such as the electric power steering device (EPS).

Patent Literature 2 discloses a configuration in which the number of sensor signal outputs from the resolvers is expanded to three phases or more, thereby making it possible to improve the reliability including an abnormality detection performance. However, even if the reliability of the respective resolvers can be improved, if any one resolver completely fails, the mechanical angle of that resolver cannot be detected just like the above case.

Also, Patent Literature 3 discloses a resolver having a first rotor disposed in an inner ring of a rolling bearing, a second rotor disposed in a cage of a rolling element, and a stator disposed in an outer ring of the rolling bearing. That is, the resolver has a configuration in which an induced voltage change caused by the rotation of two independent rotors is detected by one stator, to thereby downsize the device. Further, the output sensor signal has a composite waveform of known two components which are changed according to the rotation angles of the respective rotors. Accordingly, the relative rotation angles of the respective rotors to the stator can be detected on the basis of the sensor signal. The rotation angles of the two rotors are compared with each other, thereby making it possible to detect the rotation angle of a detection target that rotates together with the first rotor beyond the multiplication factor of angle set for the first rotor.

However, the resolver disclosed in the conventional example is intended to consistently detect the rotation angle (absolute rotation angle) of the detection target for a plurality of rotations, and is not structured to be suitable for the angle detection with high precision which is attributable to the setting of the high multiplication factor of angle. That is, the cage in which the second rotor is disposed is rotated by relative rotation of the outer ring in which the stator is disposed and the inner ring in which the first rotor is disposed. The rotation angle of the cage relative to the outer ring depends on the rotation angle of the inner ring also relative to the outer ring. However, a rate of the rotation angle change is not kept constant with exactitude responsive to the high resolution attributable to the setting of the high multiplication factor of angle. Also, a method of calculating the rotation angle based on the composite waveform cannot exclude an influence of the detection error (for example, temperature characteristics or line impedance), and in view of this matter, there is a room for improvement.

The present invention has been made to solve the above problem, and an object of the present invention is to provide a rotation angle detection device, a torque detection device, and an electric power steering device which can detect a mechanical angle with one mechanical rotation of a detection target as one cycle on the basis of a sensor signal output by one rotation angle sensor while ensuring a high angular resolution.

Solution to Problem

In order to solve the above problem, according to the present invention, there is provided A rotation angle detection device, comprising:

a rotation angle sensor configured to output sensor signals of three or more phases set so that values of the signals are changed according to a rotation angle of a detection target, and phases of signal changes corresponding to the rotation angle are equally shifted; and
detection means configured to detect the rotation angle based on the respective sensor signals,
wherein each of the sensor signals has a composite waveform of an $n^{th}$ multiple angle component (n is an integer) corresponding to a multiple of the number of phases, and an $m^{th}$ multiple angle component (m is an integer) corresponding to a non-multiple of the number of phases, and
wherein the detection means subtracts an average value of the respective sensor values from the respective sensor values, and extracts values of the $m^{th}$ multiple angle components included in the respective sensor values to detect an electric angle having a multiplication factor of angle of m, and converts m mechanical angle estimated values which are estimated based on the electric angle into values of the $n^{th}$ multiple angle component, and compares the converted values with the average value to detect a mechanical angle with one mechanical rotation of a detection target as one cycle.

That is, the average value of the respective sensor values in the sensor signals of the n phases in which the phases of the signal changes are equally shifted is equal to the value of the $n^{th}$ multiple angle components of the respective sensor values. Therefore, the average value of the respective sensor values is subtracted from the respective sensor values to subtract the values of the $m^{th}$ multiple angle components included in the respective sensor values. Also, for example, the values of the mechanical angle obtained when the electric angle having the multiplication factor of angle of m is "X°", that is, the mechanical angle estimated values are m values of "X°", "X+ (360/m) °", ..., "X+ (m-2) × (360/m) °", and "X+ (m- 1) × (360/m) °". Among those m mechanical angle estimated values, a value obtained by being substituted into a basic formula of the $n^{th}$ multiple angle component, that is, a value converted into the $n^{th}$ multiple angle component which is closest to the above average value corresponding to a real mechanical angle.

Therefore, according to the above configuration, the mechanical angle with one mechanical rotation of the detection target as one cycle can be detected on the basis of the sensor signal output by one rotation angle sensor while ensuring the high angular resolution.

Preferably, the rotation angle sensor includes a magnet rotor having a first magnetic pole portion having n pairs of magnetic poles formed along a circumferential direction, and a second magnetic pole portion having m pairs of magnetic poles formed along the circumferential direction, and a plurality of magnetic detection means corresponding to the number of phases, which are arranged at equal angular intervals on a circumference of a circle coaxial with the magnetic rotor.

According to the above configuration, the sensor signal of the three or more phases having the composite waveform of the $n^{th}$ multiple angle component, and the $m^{th}$ multiple angle component, and having the phases of the signal changes corresponding to the rotation angle equally shifted can be output with a simple configuration.

Also, according to the present invention, there is provided a torque detection device, including a pair of rotation angle detection devices configured to detect rotation angles of a rotating shaft at two positions between which a torsion bar is interposed, in which the respective rotation angle detection devices are the above- mentioned rotation angle detection devices.

According to the above configuration, the mechanical angle of the rotating shaft can be detected without newly adding a dedicated rotation angle sensor. Even when an abnormality occurs in one of the two rotation angle sensors, the detection of the mechanical angle can be continued on the basis of the sensor signal of the other rotation angle sensor. As a result, the higher reliability can be ensured with a simple configuration.

Also, according to the present invention, there is provided an electric power steering device including at least one of the above-mentioned rotation angle detection device, and the above-mentioned torque detection device.

According to the above configuration, the rotation angle of the motor which is a driving source is detected with the use of the rotation angle detection device, or a steering torque that is transmitted to the steering shaft is detected with the use of the torque detection device, to thereby detect the steering angle generated in a steering without newly adding a rotation angle sensor such as a steering sensor. In particular, in a configuration having the torque detection device, and a plurality of the rotation angle detection devices that can directly or indirectly detect the rotation angle of the steering shaft, even if an abnormality occurs in any one rotation angle sensor, the detection of the steering angle can be continued on the basis of the sensor signals on the other rotation angle sensor. As a result, the higher reliability can be ensured with a simple configuration.

Advantageous Effects of Invention

According to the present invention, there can be provided a rotation angle detection device, a torque detection device, and an electric power steering device which can detect a mechanical angle with one mechanical rotation of a detection target as one cycle on the basis of a sensor signal output by one rotation angle sensor while ensuring a high angular resolution.

Brief Description of Drawings

FIG. 1 is a schematic configuration diagram of an electric power steering device (EPS).
FIG. 2 is a control block diagram of the EPS.
FIG. 3 is a schematic configuration diagram of a rotation angle sensor.
FIGS. 4A to 4C are waveform diagrams of sensor signals output by the rotation angle sensor.
FIG. 5 is a flowchart illustrating a processing procedure of rotation angle detection.
FIG. 6 is a schematic configuration diagram of the rotation angle sensor in another example.
FIG. 7 is a waveform diagram of the sensor signals output by the rotation angle sensor in another example.

Description of Embodiments

Hereinafter, an embodiment of the present invention will be described with reference to the drawings.

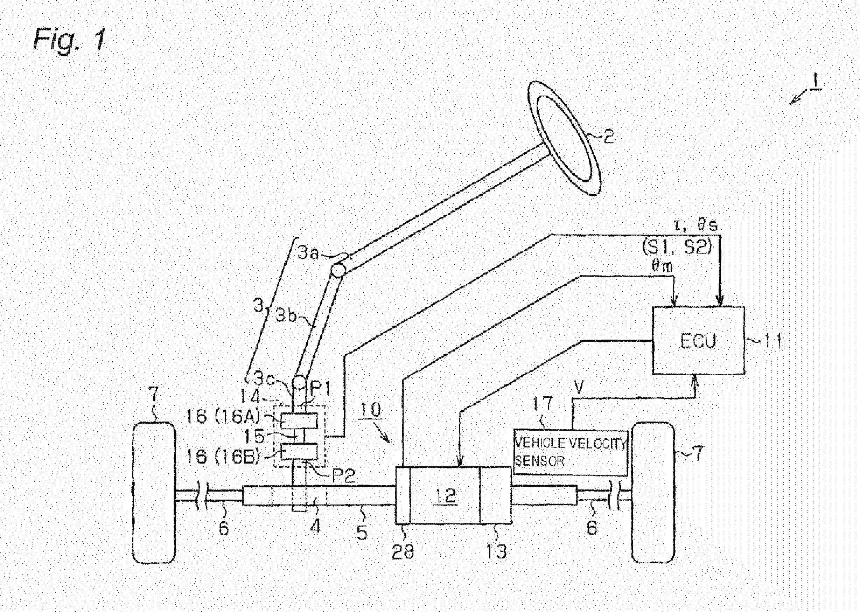

As illustrated in FIG. 1, in an electric power steering device (EPS) 1 according to this embodiment, a steering shaft 3 to which a steering 2 is fixed is coupled to a rack shaft 5 through a rack- and- pinion mechanism 4. The rotation of the steering shaft 3 associated with the steering operation is converted into a straight reciprocating motion of the rack shaft 5 by the rack- and- pinion mechanism 4. The steering shaft 3 according to this embodiment is configured by coupling a column shaft 3a, an intermediate shaft 3b, and a pinion shaft 3c to each other. The straight reciprocating motion of the rack shaft 5 associated with the rotation of the steering shaft 3 is transmitted to a knuckle not shown through a tie rod 6 coupled at both ends of the rack shaft 5, to thereby change a rudder angle of wheels 7 to be turned, that is, a traveling direction of a vehicle.

Also, the EPS 1 includes an EPS actuator 10 as a steering force assist device that gives an assist force to a steering system, and an ECU 11 as control means for controlling the actuation of the EPS actuator 10.

In more detail, the EPS actuator 10 according to this embodiment is configured as a so-called rack assist type EPS having a motor 12 as a driving source and a ball screw device 13 disposed in the rack shaft 5. In this embodiment, with the application of a brushless motor having a hollow motor shaft, the motor 12 is arranged coaxially with the rack shaft 5. The ball screw device 13 has a known configuration in which a screw shaft is formed by forming a thread groove in an outer periphery of the rack shaft 5, and the screw shaft is screwed into a ball screw nut through a plurality of balls.

Also, the motor 12 according to this embodiment rotates on the basis of driving electric forces of three phases (U, V, W) supplied from the ECU 11. Then, the EPS actuator 10 according to this embodiment converts the rotation of the motor 12 into a movement of the rack shaft 5 in an axial direction by the ball screw device 13, that is, converts a motor torque thereof into a pressing force in the axial  direction to transmit the pressing force to the rack shaft 5 to give the assist force to the steering system.

On the other hand, the ECU 11 detects a steering torque $\tau$ that is transmitted through the steering shaft 3 on the basis of an output signal of a torque sensor 14. In this embodiment, a torsion bar 15 is disposed in the middle portion of the pinion shaft 3c configuring the steering shaft 3. The torque sensor 14 employs a so-called twin resolver type torque sensor in which a pair of rotation angle sensors 16 (16A, 16B) is arranged on both ends of the torsion bar 15.

Specifically, in this embodiment, the respective two rotation angle sensors 16A and 16B configuring the torque sensor 14 are configured to output sensor signals Sa, Sb, and Sc of three phases whose values are changed according to the rotation angles of the steering shaft 3 (pinion shaft 3c) to be detected, at two positions P1 and P2 between which the torsion bar 15 is interposed. The ECU 11 detects the rotation angles at the two positions P1 and P2 between which the torsion bar 15 is interposed, on the basis of sensor signal groups S1 and S2 of two systems which are output by the respective rotation angle sensors 16A and 16B, and detects the steering torque $\tau$ on the basis of a difference between the detected rotation angles, that is, a torsion angle of the torsion bar 15.

Also, the ECU 11 according to this embodiment receives a vehicle velocity V detected by a vehicle velocity sensor 17, and the ECU 11 calculates a target value (target assist force) of the assist force to be generated in the EPS actuator 10, on the basis of the steering torque $\tau$ and the vehicle velocity V. Then, the ECU 11 is configured to control the actuation of the EPS actuator 10, that is, the assist force to be given to the steering system, by supplying the driving electric power to the motor 12 which is a driving source so as to generate the target assist force.

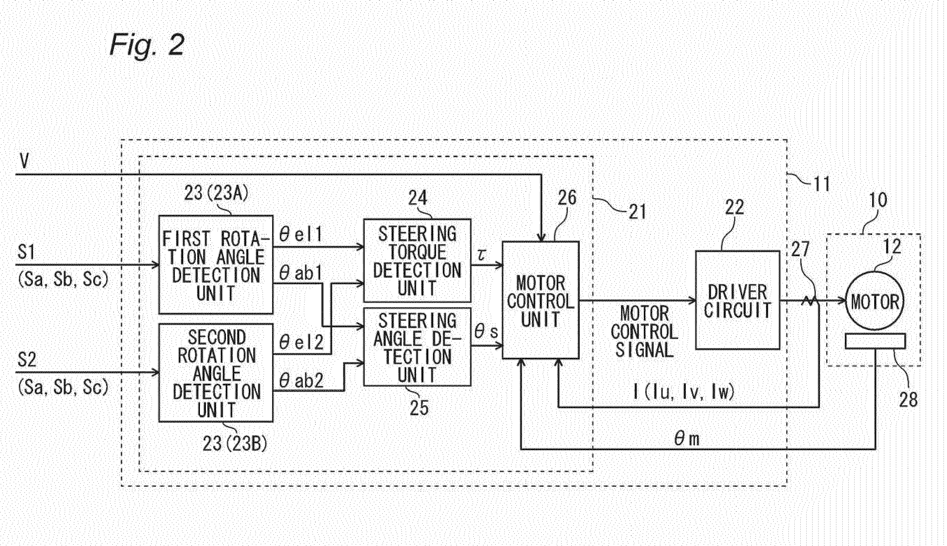

Subsequently, a mode of the assist control in the EPS according to this embodiment will be described.
As illustrated in FIG. 2, the ECU 11 includes a microcomputer 21 that outputs a motor control signal, and a driver circuit 22 that supplies the driving electric power to the motor 12 which is the driving source of the EPS actuator 10.

Control blocks described below are realized by a computer program to be executed by the microcomputer 21. Then, the microcomputer 21 detects the above respective state quantities in a given sampling cycle, and executes the respective arithmetic processing indicated by the respective following control blocks every given cycle, to thereby generate a motor control signal.

In more detail, the microcomputer 21 according to this embodiment are equipped with two rotation angle detection units 23 (23A, 23B) that detect the respective rotation angles at the two positions P1 and P2 on the steering 2 side and the rack shaft 5 side between which the torsion bar 15 is interposed, on the basis of the sensor signal groups S1 and S2 of the two systems which are output by the two rotation angle sensors 16A and 16B configuring the torque sensor 14. Then, those respective rotation angle detection units 23 (23A, 23B) detect electric angles $\theta$el1 and $\theta$el2 each having a given multiplication factor of angle, and mechanical angles $\theta$ab1 and $\theta$ab2 with one mechanical rotation of the steering shaft 3 to be detected as one cycle, on the basis of the respective sensor signals Sa, Sb, and Sc which are input as the sensor signal groups S1 and S2 corresponding to the respective rotation angle detection units 23A and 23B.

Also, the microcomputer 21 is equipped with a steering torque detection unit 24 and a steering angle detection unit 25, and the respective electric angles $\theta$el1 and $\theta$el2 detected by the above respective rotation angle detection units 23 (23A, 23B) are input to the steering torque detection unit 24, and the respective mechanical angles $\theta$ab1 and $\theta$ab2 are input to the steering angle detection unit 25. The steering torque detection unit 24 detects the steering torque $\tau$ which is transmitted through the steering shaft 3, on the basis of a difference between the respective electric angles $\theta$el1 and $\theta$el2, and the steering angle detection unit 25 detects the rudder angle generated in the steering 2, that is, the steering angle $\theta$s on the basis of the respective mechanical angles $\theta$ab1 and $\theta$ab2.

In the microcomputer 21 according to this embodiment, a motor control unit 26 that generates the motor control signal receives the vehicle velocity V detected by the vehicle velocity sensor 17 together with the steering torque $\tau$ and the steering angle $\theta$s. Then, the motor control unit 26 calculates a current command value corresponding to the target assist force to be generated in the EPS actuator 10, on the basis of the steering torque $\tau$, the steering angle $\theta$s, and the vehicle velocity V.

The motor control unit 26 calculates a basic component of the current command value such that a larger assist force is generated as the detected steering torque $\tau$ (absolute value thereof) is larger and as the detected vehicle velocity V is smaller. Then, the motor control unit 26 calculates a compensation component of the current command value (for example, a steering return control for improving a return property to a steering neutral position) on the basis of the detected steering angle $\theta$s (and the vehicle velocity V).

Also, the motor control unit 26 receives an actual current value I detected by a current sensor 27, and a motor rotation angle $\theta$m detected by a motor resolver (motor rotation angle sensor) 28. Then, the motor control unit 26 executes a current feedback control so that the detected actual current value I follows the current command value, to thereby generate the motor control signal.

Specifically, the microcomputer 21 according to this embodiment detects phase current values Iu, Iv, and Iw of the three phases (U, V, W) as the actual current values I of the motor 12. Also, the motor control unit 26 converts the phase current values Iu, Iv, and Iw into a d- axis current value and a q- axis current value of a two- phase rotating coordinate system (d/q) on the basis of the detected motor rotation angle $\theta$m. Then, the motor control unit 26 is configured to execute a current feedback control calculation in the d/q coordinate system.

In this embodiment, the rotation angle detection units 23 (23A, 23B) each have an abnormality detection function of the respective input sensor signals Sa, Sb, and Sc. Upon detecting the abnormality of the respective sensor signals Sa, Sb, and Sc, the rotation angle detection units 23 (23A, 23B) stop the respective rotation angle detections.

Also, the steering angle detection unit 25 detects the steering angle θs on the basis of the mechanical angle θab1 at the position (P1) on the steering 2 side relative to the torsion bar 15, which is input from the first rotation angle detection unit 23A, in a normal state where the steering angle detection unit 25 can acquire both of the mechanical angle θab1 detected by the first rotation angle detection unit 23A and the mechanical angle θab2 detected by the second rotation angle detection unit 23B. Then, when the rotation angle detection by the first rotation angle detection unit 23A stops, the steering angle detection unit 25 detects the steering angle θs on the basis of the mechanical angle θab2 at the position (P2) on the rack shaft 5 side relative to the torsion bar 15, which is input from the second rotation angle detection unit 23B.

Further, when the rotation angle detection in any one of the first rotation angle detection unit 23A and the second rotation angle detection unit 23B stops, the steering torque detection unit 24 stops the detection of the steering torque τ. Then, when any one of the first rotation angle detection unit 23A and the second rotation angle detection unit 23B is normal in a state where the abnormality thus occurs in the torque detection, the motor control unit 26 is configured to execute an alternative power assist control on the basis of the steering angle θs detected on the basis of the normal mechanical angle.

(Rotation Angle Sensor)

Subsequently, a description will be given of a configuration of a pair of rotation angle sensors configuring the torque sensor according to this embodiment.

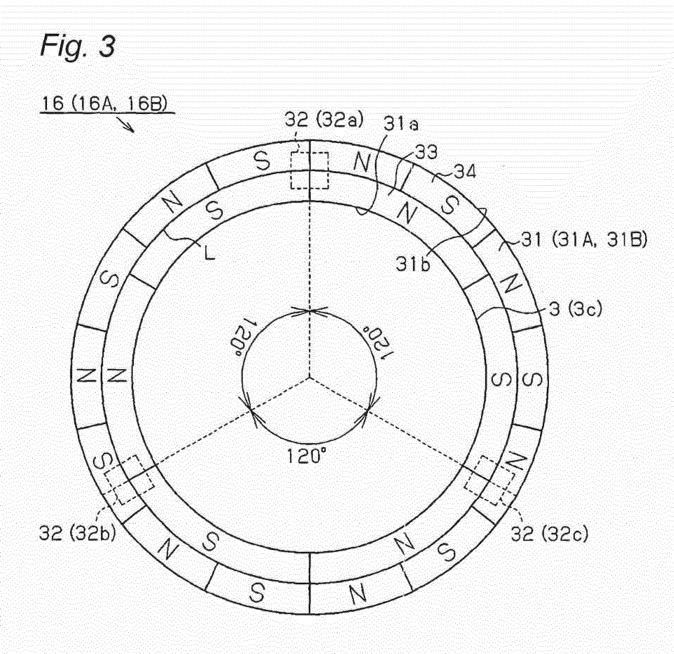

As illustrated in FIG. 3, in this embodiment, the steering shaft 3 (pinion shaft 3c) as the rotating shaft to be subjected to the rotation angle detection is equipped with a pair of magnet rotors 31 (31A, 31 B) that rotate integrally with the steering shaft 3 at the two positions P1 and P2 (refer to FIG. 2) on the steering 2 side and the rack shaft 5 side between which the torsion bar 15 is interposed. Then, the respective rotation angle sensors 16 (16A, 16B) configuring the torque sensor 14 according to this embodiment as described above are configured as the magnetic type rotation angle sensor in which the output levels of the respective sensor signals Sa, Sb, and Sc output by the rotation angle sensors 16 are changed on the basis of a change in magnetic flux caused by the rotation of those respective magnet rotors 31.

In more detail, the magnet rotors 31 according to this embodiment are formed into an annular shape with a given radial width, and magnetic poles different in polarity (N/S) are alternately formed along the circumferential direction in the magnet rotors 31. Then, the rotation angle sensors 16 (16A, 16B) according to this embodiment are formed by arranging three magnetic detection elements 32 (32a, 32b, 32c) at equal angular intervals on a circumference of a circle coaxial with the magnetic rotor 31.

Specifically, the magnet rotors 31 according to this embodiment include a first magnetic pole portion 33 having three pairs of magnetic poles (six poles in total) formed along an inner periphery 31a thereof, and a second magnetic pole portion 34 having seven pairs of magnetic poles (14 poles in total) formed along an outer periphery 31 b thereof. The above respective magnetic detection elements 32 (32a, 32b, 32c) are each formed of a Hall element. Also, in this embodiment, widths of the first magnetic pole portion 33 and the second magnetic pole portion 34 in the radial direction are set to be equal to each other. Then, those respective magnetic detection elements 32 (32a, 32b, 32c) are disposed at positions facing boundary portions (circumference L in the drawing) of the first magnetic pole portion 33 and the second magnetic pole portion 34 in the axial direction.

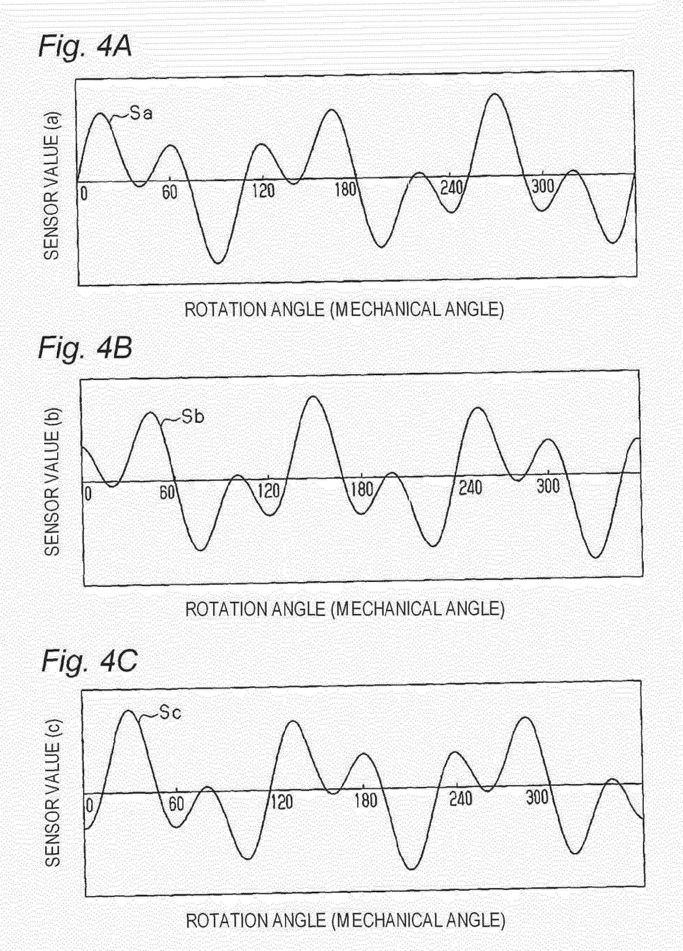

That is, in the rotation angle sensors 16 (16A, 16B) according to this embodiment, the respective magnetic detection elements 32 (32a, 32b, 32c) configuring the sensor element output the sensor signals Sa, Sb, and Sc each having a composite waveform of the triple angle component based on a magnetic field of the first magnetic pole portion 33 and a 7-fold angle component based on a magnetic field of the second magnetic pole portion 34, with the rotation of the corresponding magnet rotors 31 (31A, 31 B). Then, in the rotation angle sensors 16 (16A, 16B) according to this embodiment, these respective magnetic detection elements 32 (32a, 32b, 32c) are arranged at the equal angular intervals on the circumference of the circle coaxial with the magnetic rotor 31, to thereby outputs the sensor signals Sa, Sb, and Sc of three phases in which the phases of the signal changes are equally shifted as illustrated in FIGS. 4A to 4C.

(Rotation Angle Detection)

Subsequently, a mode of the rotation angle detection by the respective rotation angle detection units will be described.

As described above, the sensor signals Sa, Sb, and Sc of the three phases, which are output by the rotation angle sensors 16 (16A, 16B) according to this embodiment each have a composite waveform of the triple angle component equal to the number of phases, and the seven- fold angle component corresponding to a non- multiple of the number of phases. Also, since those respective magnetic detection elements 32 (32a, 32b, 32c) are disposed at positions facing the boundary portions (circumference L in the drawing) of the first magnetic pole portion 33 and the second magnetic pole portion 34 in the axial direction, the triple angle component and the seven- fold angle component are substantially equal in amplitude to each other. Therefore, when it is assumed that values (sensor values) of the respective sensor signals Sa, Sb, and Sc input as the sensor signal groups S1 and S2 to the respective rotation angle detection units 23 (23A, 23B) are "a", "b", and "c", their waveforms can be expressed by the following Expressions (1) to (3) . "θ" is the rotation angle (electric angle) .

$$a = \sin 3 (\theta) + \sin 7 (\theta) \qquad \cdots (1)$$

$$b = \sin 3 (\theta + 120°) + \sin 7 (\theta + 120°) \qquad \cdots (2)$$

$$c = \sin 3 (\theta + 240°) + \sin 7 (\theta + 240°) \qquad \cdots (3)$$

In the above Expressions, the above expressions (1) to (3) can be converted as follows.

$$a = \sin (3\theta) + \sin (7\theta) \qquad \cdots (4)$$

$$b = \sin (3\theta + 360°) + \sin (7\theta + 840°) \qquad \cdots (5)$$

$$c = \sin (3\theta + 720°) + \sin (7\theta + 1680°) \qquad \cdots (6)$$

Further, because of "sin (360°) = 0", the above expressions can be converted as follows.

$$a = \sin (3\theta) + \sin (7\theta) \qquad \cdots (7)$$

$$b = \sin (3\theta) + \sin (7\theta + 120°) \qquad \cdots (8)$$

$$c = \sin (3\theta) + \sin (7\theta + 240°) \qquad \cdots (9)$$

Then, those Expressions (7) to (9) are added, and divided by "3" which is the number of phases of the respective sensor signals Sa, Sb, and Sc to obtain the following expression.

$$(a + b + c) / 3 = \sin (3\theta) \qquad \cdots (10)$$

That is, a average value "(a+b+c)/3" of the respective sensor values a, b, and c is equal to a value of the triple angle component "sin(3θ)" included in the respective sensor values a, b, and c.

Taking this respect into account, the respective rotation angle detection units 23 (23A, 23B) as detection means subtract the average value "(a+b+c)/3" of the respective sensor values a, b, and c from the respective input sensor values a, b, and c to extract values of the seven-fold angle components included in the respective sensor values a, b, and c. Specifically, Expression (10) is subtracted from the above Expressions (7) to (9) to obtain the following respective expressions.

$$a - (a + b + c) / 3 = \sin(7\theta) \qquad \cdots (11)$$

$$b - (a + b + c) / 3 = \sin(7\theta + 120°) \qquad \cdots (12)$$

$$c - (a + b + c) / 3 = \sin(7\theta + 240°) \qquad \cdots (13)$$

Then, the respective rotation angle detection units 23 (23A, 23B) calculate three rotation angle detection values θa, θb, and θc corresponding to the number of combinations of arbitrary two signals in the respective sensor signals Sa, Sb, and Sc, on the basis of those Expressions (11) to (13) .

In detail, it is assumed that values obtained by subtracting the average value of the respective sensor values a, b, and c from left-hand sides of the above Expressions (11) to (13), that is, the respective sensor values a, b, and c are "α", "β", and "γ", respectively, as represented by the following Expressions (14) to (16).

$$\alpha = a - (a + b + c) / 3 \qquad \cdots (14)$$

$$\beta = b - (a + b + c) / 3 \qquad \cdots (15)$$

$$\gamma = c - (a + b + c) / 3 \qquad \cdots (16)$$

As a result, ratios of the combinations of arbitrary two values in those values "α", "β", and "γ" can be represented by the following Expressions (17) to (19).

$$\alpha / \beta = \sin 7\theta / \sin(7\theta + 120°) \qquad \cdots (17)$$

$$\beta / \gamma = \sin(7\theta + 120°) / \sin(7\theta + 240°) \qquad \cdots (18)$$

$$\gamma / \alpha = \sin(7\theta + 240°) / \sin 7\theta \qquad \cdots (19)$$

Then, those Expressions (17) to (19) are converted to obtain the following respective expressions.

$$\tan 7\theta = \alpha\sqrt{3} / (2\beta + \alpha) \qquad \cdots (20)$$

$$\tan 7\theta = (\beta + \gamma)\sqrt{3} / (\gamma - \beta) \qquad \cdots (21)$$

$$\tan 7\theta = -\alpha\sqrt{3} / (2\gamma + \alpha) \qquad \cdots (22)$$

That is, with the use of arctangents (arctan) represented by the following respective Expressions, three rotation angle detection values θa, θb, and θc corresponding to the number of combinations of arbitrary two signals in the respective sensor signals Sa, Sb, and Sc are obtained on the basis of the values α, β, and γ obtained by subtracting the average value of the respective sensor values a, b, and c from the respective sensor values a, b, and c.

$$\theta a = \arctan(\alpha\sqrt{3} / (2\beta + \alpha)) / 7 \qquad \cdots (23)$$

$$\theta b = \arctan((\beta + \gamma)\sqrt{3} / (\gamma - \beta)) / 7 \qquad \cdots (24)$$

$$\theta c = \arctan(-\alpha\sqrt{3} / (2\gamma + \alpha)) / 7 \qquad \cdots (25)$$

Then, the respective rotation angle detection units 23 (23A, 23B) according to this embodiment obtain a mean of those respective rotation angle detection values θa, θb, and θc to detect the electric angles θel (θel1, θel2) having a multiplication factor of angle of 7 as represented by the following expressions.

$$\theta el = (\theta a + \theta b + \theta c) / 3 \qquad \cdots (26)$$

The details of the rotation angle (electric angle) detection represented by the above Expressions (17) to (25) are referred to, for example, the disclosure of Patent Literature 2.

Then, the respective rotation angle detection units 23 (23A, 23B) calculate seven mechanical angle estimated values (θab_ e) on the basis of the electric angle θel thus detected.

That is, since the multiplication factor of angle is 7 times, for example, the values of the mechanical angles taken when the electric angle θel is "X°", that is, the mechanical angle estimated values (θab_ e) are seven values of "X°", "X+ (360/7) °", "X+2× (360/7) °", "X+3× (360/7) °", "X+4× (360/7) °", "X+5× (360/7) °", and "X+6× (360/7) °".

In this embodiment, the respective rotation angle detection units 23 (23A, 23B) substitute those respective mechanical angle estimated values (θab_ e) into basic expressions of the triple angle component included in the respective sensor values a, b, and c (refer to Expression (10)). Then, the respective rotation angle detection units 23 (23A, 23B) compare values obtained by converting the respective values obtained by the substitution, that is, the respective mechanical angle estimated values (θab_ e) into the triple angle components with the above average value ((a+b+c) / 3), and detects a closest value (absolute value of a difference therebetween is small) as the mechanical angles (θab1, θab2).

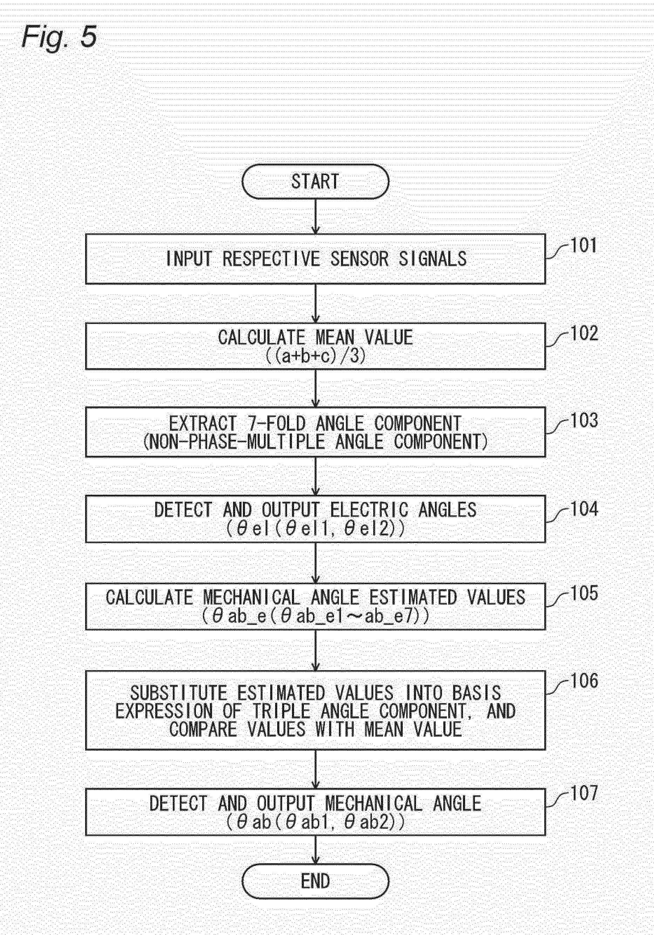

That is, as illustrated in a flowchart of FIG. 5, when receiving the sensor signals Sa, Sb, and Sc of the three phases from the corresponding rotation angle sensors 16 (Step 101), the respective rotation angle detection units 23 (23A, 23B) first calculate the average value ((a+b+c) / 3) of the respective sensor values a, b, and c (Step 102, refer to the above Expressions (1) to (10)). Subsequently, the respective rotation angle detection units 23 (23A, 23B) subtract the average value calculated in the above Step 102 from the respective sensor values a, b, and c, to thereby extract the seven-fold angle components included in the respective sensor values a, b, and c (non-phase-multiple angle component: Step 103, refer to the above Expressions (11) to (13). Then, the rotation angle detection units 23 (23A, 23B) detect the electric angles θel (θel and θel2) having the multiplication factor of angle of 7 on the basis of the seven-fold angle component (refer to (17) to (25), and output the electric angle θel to the above steering torque detection unit 24 (Step 104).

Then, the respective rotation angle detection units 23 (23A, 23B) calculate seven mechanical angle estimated values (θab_e) (θab_e1 to θab_e7) corresponding to the multiplication factor of angle on the basis of the electric angle θel calculated in the above Step 104 (Step 105). Further, the rotation angle detection units 23 (23A, 23B) compare values obtained by substituting those respective mechanical angle estimated values θab_e into the basic expressions of the triple angle components included in the respective sensor values a, b, and c with the above average value (Step 106, refer to the above Expression (10)). Then, the rotation angle detection units 23 (23A, 23B) detect the mechanical angles θab (θab1, θab2) of the steering shaft 3 to be detected, on the basis of the comparison result, and output the detected mechanical angles θab to the steering angle detection unit 25 (Step 107).

From the above description, according to this embodiment, the following advantages can be obtained. (1) The respective rotation angle sensors 16 (16A, 16B) configuring the torque sensor 14 output the sensor signals Sa, Sb, and Sc of the three phases having the composite waveform of the triple angle component and the seven-fold angle component, in which the phases of the signal changes according to the rotation angle are equally shifted. On the other hand, the respective rotation angle detection units 23 (23A, 23B) subtract the average value of the respective sensor values a, b, and c from the respective sensor values a, b, and c, and extract the values of the seven-fold angle components included in the respective sensor values a, b, and c, to thereby detect the electric angles θel (θel1 and θel2) having the multiplication factor of angle of 7. Then, the rotation angle detection units 23 (23A, 23B) convert the seven mechanical angle estimated values θab_e (θab_e1 to θab_e7) estimated on the basis of eth electric angle θel into the triple angle components, and compare the triple angle components with the average value of the respective sensor values a, b, and c to detect the mechanical angles θab (θab1, θab2) of the steering shaft 3 to be detected.

According to the above configuration, the mechanical angles θab (θab1, θab2) with one mechanical rotation of the steering shaft 3 to be detected as one cycle can be detected on the basis of the sensor signals Sa, Sb, and Sc which are output by one rotation angle sensor 16 while ensuring the high angular resolution. As a result, the steering angle θs generated in the steering 2 can be detected without adding the rotation angle sensor such as the steering sensor. Then, even when an abnormality occurs in one of the respective rotation angle sensors 16 (16A, 16B), the detection of the steering angle θs can be continued with the use of the mechanical angle detected on the other rotation angle sensor. As a result, the higher reliability can be ensured with a simple configuration.

(2) The rotation angle sensors 16 includes the magnet rotors 31 having the first magnetic pole portion 33 having three pairs of magnetic poles formed along the circumferential direction, and the second magnetic pole portion 34 having seven pairs of magnetic poles formed along the circumferential direction, and the three magnetic detection elements 32 (32a, 32b, 32c) arranged at the equal angular intervals on the circumference of the circle coaxial with the magnetic rotor 31.

According to the above configuration, the sensor signals Sa, Sb, and Sc of the three phases having the composite waveform of the triple angle component and the seven-fold angle component in which the phases of the signal changes according to the rotation angle are equally shifted can be output with a simple configuration.

The above embodiment may be changed as follows.

In the above embodiment, the present invention is embodied by the ECU 11 configuring the rotation angle detection device in the EPS 1. However, the present invention is not limited to this configuration, but may be embodied by a rotation angle detection device used for the intended purpose other than the EPS.

Also, even when the present invention is embodied by the rotation angle sensor for the EPS, the type of the EPS is not limited to a so-called column type, but may be a so-called pinion type or rack assist type.

Further, in the above embodiment, the present invention is applied to the rotation angle detection using the respective rotation angle sensors 16 (16A, 16B) configuring the torque sensor 14 to detect the mechanical angle of the steering shaft 3. However, the present invention is not limited to this configuration, but may be applied to, for example, the motor resolver (motor rotation angle sensor) 28 to detect the rotation angle (electric angle: motor rotation angle θm) of the motor 12 which is the driving source of the EPS actuator 10. Then, the mechanical angle of the motor rotating shaft may be detected to detect the steering angle θs generated in the steering 2 on the basis of the mechanical angle and a reduction ratio of the EPS actuator 10. Further, the rotation angle detection device of the present invention may be applied to both of the rotation angle detection of the steering shaft 3 by the respective rotation angle sensors 16 (16A, 16B) configuring the torque sensor 14, and the motor rotation angle detection by the motor resolver 28. Then, the rotation angle detection device according to this embodiment may be also applied to a configuration in which the steering angle detection is conducted with the use of a dedicated rotation angle sensor (steering sensor).

In the above embodiment, the sensor signals Sa, Sb, and Sc of the three phases, which are output by the rotation angle sensors 16 (16A, 16B) each have the composite waveform of the triple angle component equal to the number of phases, and the seven-fold angle component corresponding to a non-multiple of the number of phases. However, the present invention is not limited to this configuration, but the respective sensor signals have only to have the composite waveform of the $n^{th}$ multiple angle component (n is an integer) corresponding to the multiple of the number of phases of the respective sensor signals, and the $m^{th}$ multiple angle component (m is an integer) corresponding to the non-multiple of the number of phases $(\sin(n\theta) + \sin(m\theta))$.

In detail, when it is assumed that the $n^{th}$ multiple angle component corresponding to the multiple of the number of phases is "phase-multiple angle component", and the $m^{th}$ multiple angle component corresponding to the non-multiple of the number of phases is "non-phase-multiple angle component", for example, the respective sensor signals Sa, Sb, and Sc may include a six-fold angle component corresponding to twice as large as the number of phases as "phase multiple angle component".

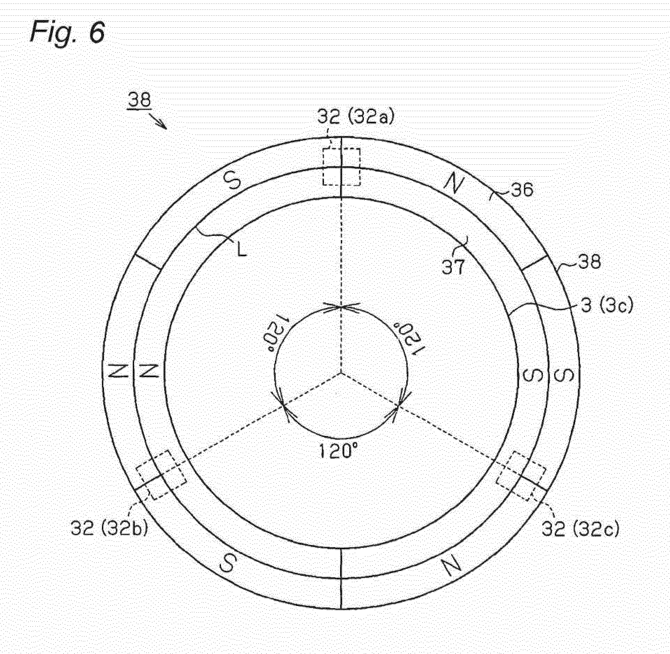

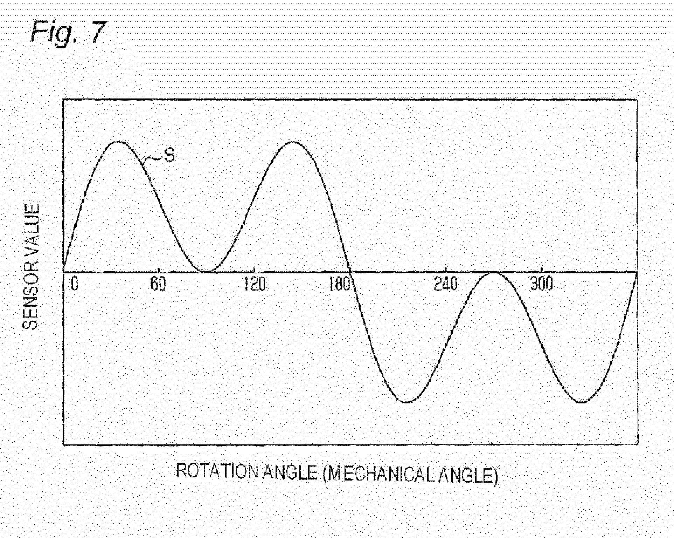

Also, "non- phase- multiple angle component" may be smaller than the "phase multiple angle component". In detail, for example, as illustrated in FIG. 6, there is used a rotation angle sensor 38 including a first magnetic pole portion 36 having three pairs of magnetic poles equal to the number of magnetic detection elements 32 (32a, 32b, 32c), that is, the number of phases in the sensor signals, and a second magnetic pole portion 37 having a pair of magnetic poles. That is, the rotation angle sensor 38 outputs the sensor signals Sa, Sb, and Sc of the three phases having the composite waveform of a triple angle component $(\sin 3\theta)$, and a 1- fold angle component as "non- phase- multiple angle component", that is, the respective sensor signals Sa, Sb, and Sc having a basic waveform S as illustrated in FIG. 7. Thus, the multiplication factor of angle (electric angle magnification) of the detected electric angle is set to be small, to thereby reduce the number of mechanical angles estimated from the detected electric angle and reduce an arithmetic load required for detection of the mechanical angle. In particular, when the multiplication factor of angle of the "non- phase- multiple angle component" is "1", the number of mechanical angle estimated values becomes one. Therefore, in this case, the calculation of the mechanical angle estimated values, and the process of comparing the values obtained by substituting the mechanical angle estimated values into the basic expression of the "phase multiple angle component" with the above means value (refer to FIG. 5, Steps 105 and 106) can be omitted.

Further, in the number of phases of the sensor signals, the number of phases is not limited if the number of phases is three or more.
In the above embodiment, the respective magnetic detection elements 32 (32a, 32b, 32c) are formed of Hall elements, but may be formed of magnetic resistive elements (GMR, etc.) .

In the above embodiment, the respective rotation angle sensors 16 (16A, 16B) are configured as magnetic rotation angle sensors with the magnetic detection elements 32 (32a, 32b, 32c) which are the sensor elements. However, the sensor elements are not limited to the magnetic detection means, but a resolver that outputs the sensor signals on the basis of a excitation signal may be used for the rotation angle sensor. The resolver that outputs the sensor signals having the composite waveform of the known two components is disclosed in, for example, JP- A- 2008- 157664.

In the above embodiment, the amplitudes of the triple angle component and the seven-fold angle component are substantially equal to each other. However, an amplitude ratio of the "phase multiple angle component" and the "non-phase-multiple angle component" is not always limited to this configuration.

Subsequently, a technical concept that can be grasped from the above embodiment will be described.

(A) The rotation angle sensor including the magnet rotor having the first magnetic pole portion having n pairs (n is an integer) of magnetic poles formed along the circumferential direction, and the second magnetic pole portion having m pairs (m is an integer) of magnetic poles formed along the circumferential direction, and the plurality of magnetic detection means corresponding to the number of phases, which are arranged at the equal angular intervals on the circumference of the circle coaxial with the magnet rotor. With the above configuration, the sensor signals of the n phases having the composite waveform of the $m^{th}$ angle component and the $n^{th}$ angle component in which the phases of the signal changes according to the rotation angle are equally shifted can be output with a simple configuration.

(B) A rotation angle detection method for detecting the rotation angle on the basis of sensor signals of three or more phases set so that values of the signals are changed according to a rotation angle of a detection target, and phases of signal changes corresponding to the rotation angle are equally shifted, in which each of the sensor signals has a composite waveform of an $n^{th}$ multiple angle component (n is an integer) corresponding to a multiple of the number of phases, and an $m^{th}$ multiple angle component (m is an integer) corresponding to a non-multiple of the number of phases, and in which a average value of the respective sensor values is subtracted from the respective sensor values, and values of the $m^{th}$ multiple angle components included in the respective sensor values are extracted to detect an electric angle having a multiplication factor of angle of m, and m mechanical angle estimated values which are estimated on the basis of the electric angle is converted into values of the $n^{th}$ multiple angle component, and compared with the average value to detect a mechanical angle with one mechanical rotation of a detection target as one cycle. With the above configuration, the mechanical angle with one mechanical rotation of the detection target as one cycle can be detected on the basis of the sensor signal output by one rotation angle sensor while ensuring a high angular resolution.

The present invention has been described in detail and with reference to the specified embodiments, but can be variously changed or modified without departing from the spirit and scope of the present invention.
The present invention is based on Japanese Patent Application No. 2010-276014 filed on December 10, 2010, and content thereof is incorporated herein by reference.

Industrial Applicability

According to the rotation angle detection device of the present invention, the mechanical angle with one mechanical rotation of the detection target as one cycle can be detected on the basis of the sensor signal output by one rotation angle sensor while ensuring a high angular resolution.

Reference Signs List

1, electric power steering device (EPS); 2, steering; 3, steering shaft; 10, EPS actuator; 11, ECU; 12, motor; 14, torque sensor; 15, torsion bar; 16 (16A, 16B), 38, rotation angle sensor; 21, microcomputer; 23, rotation angle detection units; 23A, first rotation angle detection unit; 23B, second rotation angle detection unit; 24, steering torque detection unit; 25, steering angle detection unit; 28, motor resolver; 31, magnet rotor; 32 (32a, 32b, 32c), magnetic detection elements; 33, 36, first magnetic pole part; 34, 37, second magnetic pole portion; S1, S2, sensor signal group; Sa, Sb, Sc, sensor signal; a, b, c, sensor value; $\theta a$, $\theta b$, $\theta c$, rotation angle detection value; $\theta el$ ($\theta el1$, $\theta el2$), electric angle; $\tau$, steering torque; $\theta ab\_e$($\theta ab\_e1$ to $\theta ab\_e7$), mechanical angle estimated value; $\theta ab$ ($\theta ab1$, $\theta ab2$), mechanical angle; $\theta s$, steering angle; and $\theta m$, motor rotation angle.

## Claims

1. A rotation angle detection device, comprising:

   a rotation angle sensor configured to output sensor signals of three or more phases set so that values of the signals are changed according to a rotation angle of a detection target, and phases of signal changes corresponding to the rotation angle are equally shifted; and
   detection means configured to detect the rotation angle based on the respective sensor signals,
   wherein each of the sensor signals has a composite waveform of an $n^{th}$ multiple angle component (n is an integer) corresponding to a multiple of the number of phases, and an $m^{th}$ multiple angle component (m is an integer) corresponding to a non-multiple of the number of phases, and
   wherein the detection means subtracts an average value of the respective sensor values from the respective sensor values, and extracts values of the $m^{th}$ multiple angle components included in the respective sensor values to detect an electric angle having a multiplication factor of angle of m, and converts m mechanical angle estimated values which are estimated based on the electric angle into values of the $n^{th}$ multiple angle component, and compares the converted values with the average value to detect a mechanical angle with one mechanical rotation of a detection target as one cycle.

2. The rotation angle detection device according to claim 1,
   wherein the rotation angle sensor includes a magnet rotor having a first  magnetic pole portion having n pairs of magnetic poles formed along a circumferential direction, and a second magnetic pole portion having m pairs of magnetic poles formed along the circumferential direction, and a plurality of magnetic detection means corresponding to the number of phases, which are arranged at equal angular intervals on a circumference of a circle coaxial with the magnetic rotor.

3. A torque detection device, comprising:

   a pair of rotation angle detection devices configured to detect rotation angles of a rotating shaft at two positions between which a torsion bar is interposed,
wherein the respective rotation angle detection devices are the rotation angle detection devices according to claim 1 or 2.

4. An electric power steering device comprising: any one of the rotation angle detection device according to claims 1 or 2, and the torque detection device according to claim 3.

EP 2 650 652 A1

*Fig. 1*

*Fig. 2*

Fig. 3

**Fig. 4A**

SENSOR VALUE (a)

0   60   120   180   240   300

ROTATION ANGLE (MECHANICAL ANGLE)

Sa

**Fig. 4B**

SENSOR VALUE (b)

0   60   120   180   240   300

ROTATION ANGLE (MECHANICAL ANGLE)

Sb

**Fig. 4C**

SENSOR VALUE (c)

0   60   120   180   240   300

ROTATION ANGLE (MECHANICAL ANGLE)

Sc

*Fig. 5*

```
                    ┌─────────────┐
                    │    START    │
                    └──────┬──────┘
                           │
                           ▼
        ┌──────────────────────────────────────┐
        │    INPUT RESPECTIVE SENSOR SIGNALS    │──101
        └──────────────────┬───────────────────┘
                           │
                           ▼
        ┌──────────────────────────────────────┐
        │         CALCULATE MEAN VALUE          │──102
        │            ((a+b+c)/3)                │
        └──────────────────┬───────────────────┘
                           │
                           ▼
        ┌──────────────────────────────────────┐
        │     EXTRACT 7-FOLD ANGLE COMPONENT    │──103
        │    (NON-PHASE-MULTIPLE ANGLE COMPONENT)│
        └──────────────────┬───────────────────┘
                           │
                           ▼
        ┌──────────────────────────────────────┐
        │    DETECT AND OUTPUT ELECTRIC ANGLES  │──104
        │        (θel(θel1, θel2))              │
        └──────────────────┬───────────────────┘
                           │
                           ▼
        ┌──────────────────────────────────────┐
        │ CALCULATE MECHANICAL ANGLE ESTIMATED VALUES│──105
        │        (θab_e(θab_e1~ab_e7))          │
        └──────────────────┬───────────────────┘
                           │
                           ▼
        ┌──────────────────────────────────────┐
        │  SUBSTITUTE ESTIMATED VALUES INTO BASIS│──106
        │  EXPRESSION OF TRIPLE ANGLE COMPONENT, AND│
        │     COMPARE VALUES WITH MEAN VALUE    │
        └──────────────────┬───────────────────┘
                           │
                           ▼
        ┌──────────────────────────────────────┐
        │   DETECT AND OUTPUT MECHANICAL ANGLE  │──107
        │        (θab(θab1, θab2))              │
        └──────────────────┬───────────────────┘
                           │
                           ▼
                    ┌─────────────┐
                    │     END     │
                    └─────────────┘
```

Fig. 6

*Fig. 7*

<div align="center">

**INTERNATIONAL SEARCH REPORT**

</div>

| | International application No. |
|---|---|
| | PCT/JP2011/078609 |

**A. CLASSIFICATION OF SUBJECT MATTER**

*G01D5/14*(2006.01)i, *B62D5/04*(2006.01)i, *G01B7/30*(2006.01)i, *G01D5/20* (2006.01)i, *G01L3/10*(2006.01)i

According to International Patent Classification (IPC) or to both national classification and IPC

**B. FIELDS SEARCHED**

Minimum documentation searched (classification system followed by classification symbols)
G01D5/00-5/62, B62D5/04, G01B7/00-7/30, G01L3/10

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-304249 A (Yaskawa Electric Corp.), 18 December 2008 (18.12.2008), entire text; all drawings (Family: none) | 1-4 |
| A | JP 2003-516534 A (Robert Bosch GmbH), 13 May 2003 (13.05.2003), entire text; all drawings & AU 2828501 A    & DE 10041095 A1 & EP 1238251 A    & US 2003/0145663 A1 & WO 2001/042753 A1 | 1-4 |
| A | JP 2002-303537 A (Asahi Optical Co., Ltd.), 18 October 2002 (18.10.2002), entire text; all drawings & DE 10204641 A    & US 2002/0105445 A1 | 1-4 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 March, 2012 (01.03.12) | 13 March, 2012 (13.03.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

EP 2 650 652 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005147733 A
- JP 2010048760 A
- JP 2007051683 A
- JP 2008157664 A
- JP 2010276014 A